# EUROPEAN PATENT APPLICATION

(11) **EP 4 845 284 A1**
(43) Date of publication of application: **25.11.2026**
(21) Application number: 25742198.2
(22) Date of filing: 15.01.2025
(51) Int. Cl.: H04W 74/00, H04L 1/08, H04W 72/232, H04L 1/00, H04B 17/318, H04W 84/06, H04W 74/0833, H04W 72/231

(54) **METHOD AND APPARATUS FOR IMPROVING COVERAGE OF BASE STATION-TO-TERMINAL PHYSICAL SHARED CHANNEL TRANSMISSION IN NON-TERRESTRIAL NETWORK ENVIRONMENT**

(30) Priority: 16.01.2024 KR 20240006848; 02.02.2024 KR 20240016740
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Plasseraud IP
(86) International application number: PCT/KR2025/000903
(87) International publication number: WO 2025/155096

(57) **Abstract**

An operation method of a first device (100) in a wireless communication system is presented. The method comprises the steps of: acquiring information about a plurality of resources; and performing a plurality of communication operations on the basis of the plurality of resources, wherein redundant versions related to a plurality of transmissions related to the plurality of communication operations can be the same.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that may be performed by a first device may be proposed. For example, the method may comprise: obtaining information for a plurality of resources; and performing a plurality of communication operations based on the plurality of resources, wherein redundancy versions related to a plurality of transmissions related to the plurality of communication operations may be the same.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information for a plurality of resources; and perform a plurality of communication operations based on the plurality of resources, wherein redundancy versions related to a plurality of transmissions related to the plurality of communication operations may be the same.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: obtain information for a plurality of resources; and perform a plurality of communication operations based on the plurality of resources, wherein redundancy versions related to a plurality of transmissions related to the plurality of communication operations may be the same.

According to an embodiment of the present disclosure, a non-transitory computer-readable storage medium storing instructions may be proposed. For example, the instructions, when executed, may cause a first device to: obtain information for a plurality of resources; and perform a plurality of communication operations based on the plurality of resources, wherein redundancy versions related to a plurality of transmissions related to the plurality of communication operations may be the same.

According to an embodiment of the present disclosure, a method that may be performed by a second device may be proposed. For example, the method may comprise: transmitting, to a first device, information for a plurality of resources; and performing a plurality of base station-to-device transmission operations based on the plurality of resources, wherein redundance versions related to the plurality of base station-to-device transmission operations may be the same.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, information for a plurality of resources; and perform a plurality of base station-to-device transmission operations based on the plurality of resources, wherein redundance versions related to the plurality of base station-to-device transmission operations may be the same.

### BRIEF DESCRIPTION OF THE DRAWINGS

FIG. 1 shows a communication procedure between devices according to an embodiment of the present disclosure.
FIG. 2 shows a radio protocol architecture according to an embodiment of the present disclosure.
FIG. 3 shows a structure of a radio frame according to an embodiment of the present disclosure.
FIG. 4 shows a slot structure of a frame according to an embodiment of the present disclosure.
FIG. 5 shows an example of a BWP according to an embodiment of the present disclosure.
FIG. 6 shows a communication structure providable in a 6G system according to an embodiment of the present disclosure.
FIG. 7 shows an example of a communication scenario based on a 6G system according to an embodiment of the present disclosure.
FIG. 8 shows an example in which base station-to-UE physical shared channel repetition is performed in a random access procedure, according to an embodiment of the present disclosure.
FIG. 9 shows base station-to-UE physical shared channel (e.g., PDSCH) repetition, according to an embodiment of the present disclosure.
FIG. 10 shows a procedure of a method which may be performed by a first device according to an embodiment of the present disclosure.
FIG. 11 shows a procedure of a method which may be performed by a second device according to an embodiment of the present disclosure.
FIG. 12 shows a communication system 1, based on an embodiment of the present disclosure.
FIG. 13 shows wireless devices, based on an embodiment of the present disclosure.
FIG. 14 shows a signal process circuit for a transmission signal, based on an embodiment of the present disclosure.
FIG. 15 shows another example of a wireless device, based on an embodiment of the present disclosure.
FIG. 16 shows a hand-held device, based on an embodiment of the present disclosure.
FIG. 17 shows a vehicle or an autonomous vehicle according to an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (e.g., PDCCH)", it may also mean that "PDCCH" is proposed as an example of the "control information".

In the following description, 'when, if, or in case of' may be replaced with 'based on'.

In the present disclosure, that a device obtains information may include that the information is (pre-)configured for the device, that the information is received by the device from another entity, and that the device generates corresponding information.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In the present disclosure, being "configured or defined" may be interpreted as being configured or pre-configured for a device through signaling (e.g., a SIB, a MAC, an RRC, a downlink control information (DCI), and the like) predefined from a base station or a network. In the present disclosure, being "configured or defined" may be interpreted as being configured or pre-configured for a device through signaling (e.g., a MAC, an RRC, a sidelink control information (SCI), control information signaled between devices, and the like) predefined from another device. In the present disclosure, being "configured or defined" may be interpreted as being pre-configured for a device.

In the present disclosure, a user equipment (UE) may refer to a device, a portable device, a wireless device, and the like. In the present disclosure, a base station (BS) may refer to a radio access network (RAN) node, a non-terrestrial network (NTN) cell/node, a transmission reception point (TRP), a network, an integrated access and backhaul (IAB) node, a device, a portable device, a wireless device, and the like.

The technology described in the present disclosure may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on.

The technologies proposed in the present disclosure may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

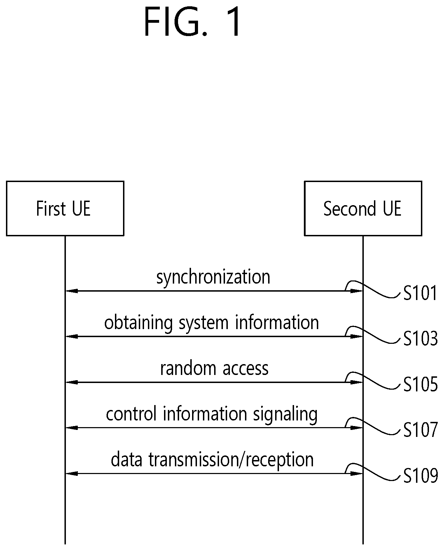

FIG. 1 shows a communication procedure between devices according to an embodiment of the present disclosure. The embodiment of FIG. 1 may be combined with various embodiments of the present disclosure.

Referring to FIG. 1, in step S101, a first device and a second device may perform synchronization. For example, the first device may be at least any one of a UE and/or a device proposed in the present disclosure. For example, the second device may be at least any one of a base station, a network, a RAN node, an NTN node/cell, a TRP, a UE, and/or a device proposed in the present disclosure. For example, the first device may perform an initial cell search operation. For example, the first device may detect at least one synchronization signal transmitted according to a predefined rule by the second device. Here, for example, the synchronization signal may include a plurality of synchronization signals (e.g., a primary synchronization signal, a secondary synchronization signal, etc.) classified according to a structure or a use. Through this, the first device may check a boundary of a frame, a subframe, a time unit, a slot, and/or a symbol of the second device, and the first device may obtain information (e.g., a cell identifier) on the second device.

In step S103, a first device may obtain system information transmitted by a second device. For example, system information may include information related to properties, characteristics, and/or capabilities of a second device required to access the second device and use a service. For example, system information may be classified according to content (e.g., whether it is essentially required for access), a transmission structure (e.g., a channel used, whether it is provided on-demand), and the like. For example, system information may be classified into a master information block (MIB) and a system information block (SIB). For example, if necessary, a first device may transmit a signal for requesting system information prior to receiving system information. For example, request and provision of system information may be performed after a random access procedure to be described later.

In step S105, a first device and a second device may perform a random access procedure. For example, a first device may transmit and/or receive at least one message (e.g., a random access preamble, a random access response message, etc.) for a random access procedure based on information related to a random access channel of a second device (e.g., channel location, channel structure, a structure of a supported preamble, etc.) obtained through system information. For example, a first device may transmit a preamble (e.g., Msg1) through a random access channel, a first device may receive a random access response message (e.g., Msg2), a first device may transmit a message (e.g., Msg3) including information related to a first device (e.g., identification information) to a second device by using scheduling information included in a random access response message, and a first device may receive a message (e.g., Msg4) for contention resolution and/or connection establishment. For example, Msg1 and Msg3 may be transmitted and received as a single message (e.g., MsgA), and/or Msg2 and Msg4 may be transmitted and received as a single message (e.g., MsgB).

In step S107, a first device and a second device may perform signaling of control information. Here, for example, control information may be defined in various layers such as a layer for controlling a connection (e.g., a radio resource control (RRC) layer), a layer for processing mapping between a logical channel and a transport channel (e.g., a media access control (MAC) layer), and a layer for processing a physical channel (e.g., a physical (PHY) layer). For example, a first device and a second device may perform at least one of signaling for establishing a connection, signaling for determining a configuration related to communication, and/or signaling for indicating an allocated resource. For example, control information may be signaled/transmitted through a control channel. For example, control information and/or a control channel may be used to schedule at least any one of data, a data channel (e.g., a shared channel), and/or control information on a data channel.

In step S109, a first device and a second device may transmit and/or receive data. For example, a first device and a second device may process, transmit, and/or receive data based on signaling of control information. For example, in a case of transmitting data, a first device or a second device may perform at least one of channel encoding, rate matching, scrambling, constellation mapping, layer mapping, waveform modulation, antenna mapping, and/or resource mapping for information bits. For example, in a case of receiving data, a first device or a second device may perform at least one of signal extraction from a resource, waveform demodulation for each antenna, signal arrangement considering layer mapping, constellation demapping, descrambling, and/or channel decoding.

For example, layers of a radio interface protocol between a first device and a second device may be classified into L1 (layer 1), L2 (layer 2), L3 (layer 3), and the like. For example, a physical layer belonging to a first layer may provide an information transfer service using a physical channel, and a radio resource control (RRC) layer located in a third layer may perform a role of controlling radio resources between a first device and a second device. To this end, for example, an RRC layer may exchange an RRC message between a first device and a second device.

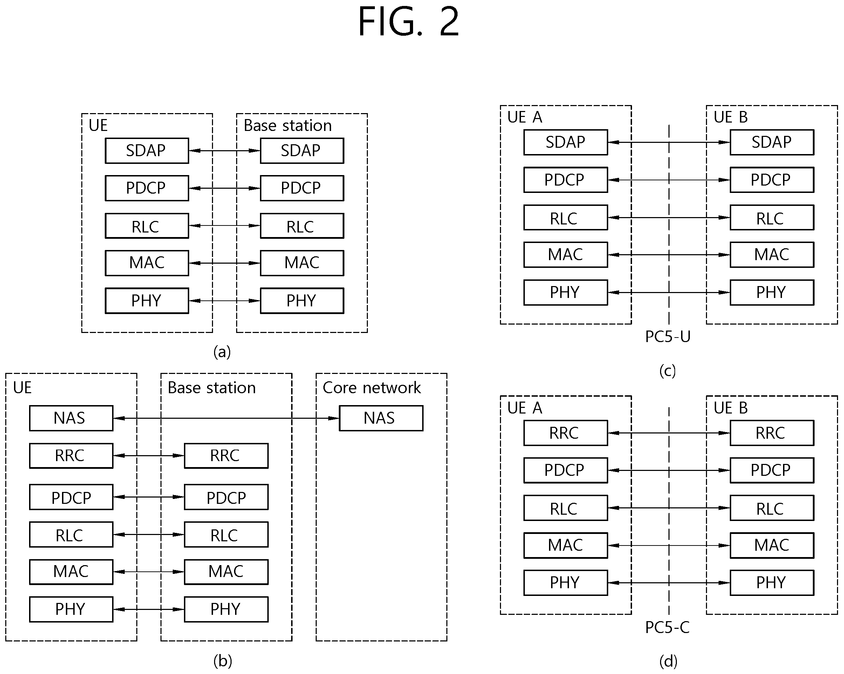

FIG. 2 shows a radio protocol architecture according to an embodiment of the present disclosure. The embodiment of FIG. 2 may be combined with various embodiments of the present disclosure. For example, (a) of FIG. 2 may show a radio protocol stack of a user plane for uplink communication or downlink communication, and (b) of FIG. 2 may show a radio protocol stack of a control plane for uplink communication or downlink communication. For example, (c) of FIG. 2 may show a radio protocol stack of a user plane for inter-device communication, and (d) of FIG. 2 may show a radio protocol stack of a control plane for inter-device communication.

For example, a physical layer may provide an information transfer service to a higher layer by using a physical channel. For example, a physical layer may be connected with a medium access control (MAC) layer, which is a higher layer, through a transport channel. For example, data may be transferred between a MAC layer and a physical layer through a transport channel. For example, a transport channel may be classified according to how and with what characteristics data is transmitted through a radio interface. For example, data may be transmitted through a physical channel between different physical layers, for example, between physical layers of a first device and a second device. For example, the physical channel may be modulated in an orthogonal frequency division multiplexing (OFDM) scheme, and time and frequency may be utilized as radio resources.

For example, a MAC layer may provide a service to a radio link control (RLC) layer, which is a higher layer, through a logical channel. For example, a MAC layer may provide a mapping function from a plurality of logical channels to a plurality of transport channels. For example, a MAC layer may provide a logical channel multiplexing function by mapping from a plurality of logical channels to a single transport channel. For example, a MAC sublayer may provide a data transfer service on a logical channel.

For example, an RLC layer may perform concatenation, segmentation, and reassembly of an RLC service data unit (SDU). For example, to guarantee various quality of service (QoS) required by a radio bearer (RB), an RLC layer may provide three operation modes of a transparent mode (TM), an unacknowledged mode (UM), and an acknowledged mode (AM). For example, an AM RLC may provide error correction through an automatic repeat request (ARQ).

For example, a radio resource control (RRC) layer may be defined only in a control plane. For example, an RRC layer may be in charge of control of logical channels, transport channels, and physical channels in relation to configuration, reconfiguration, and release of radio bearers. For example, an RB may mean a logical path provided by a first layer (e.g., a physical layer) and a second layer (e.g., a MAC layer, an RLC layer, a packet data convergence protocol (PDCP) layer, a service data adaptation protocol (SDAP) layer, etc.) for data transfer between a first device and a second device.

For example, functions of a PDCP layer in a user plane may include delivery of user data, header compression, and ciphering. For example, functions of a PDCP layer in a control plane may include delivery of control plane data and ciphering/integrity protection.

For example, that an RB is configured may mean a process of defining characteristics of a radio protocol layer and a channel to provide a specific service, and configuring each specific parameter and an operation method. For example, an RB may be divided into two: a signaling radio bearer (SRB) and a data radio bearer (DRB). For example, an SRB may be used as a path for transmitting an RRC message in a control plane, and a DRB may be used as a path for transmitting user data in a user plane.

For example, a downlink transport channel may include at least one of a broadcast channel (BCH) for transmitting system information and/or a downlink shared channel (SCH) for transmitting user traffic or a control message. For example, traffic or a control message for a downlink multicast or broadcast service may be transmitted through the downlink SCH, or may be transmitted through a separate multicast channel (MCH). Meanwhile, an uplink transport channel may include at least one of a random access channel (RACH) for transmitting an initial control message and/or an uplink shared channel (SCH) for transmitting user traffic or a control message. For example, a logical channel that is above a transport channel and mapped to the transport channel may include at least one of a broadcast control channel (BCCH), a paging control channel (PCCH), a common control channel (CCCH), a multicast control channel (MCCH), and/or a multicast traffic channel (MTCH).

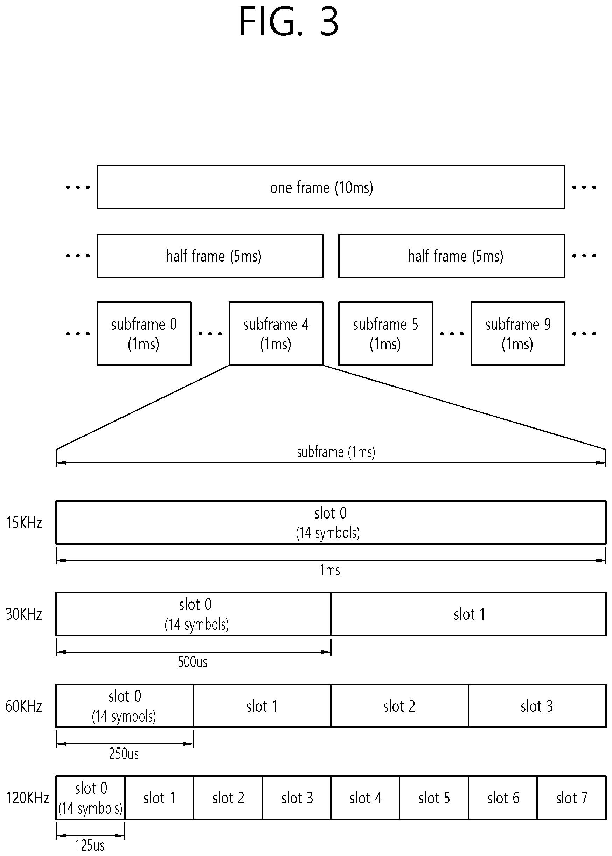

FIG. 3 shows a structure of a radio frame according to an embodiment of the present disclosure. The embodiment of FIG. 3 may be combined with various embodiments of the present disclosure.

Referring to FIG. 3, for example, a radio frame may be used for uplink transmission, downlink transmission, and/or inter-device transmission. For example, the radio frame may have a length of 10 ms and may be defined as two 5 ms half-frames (HFs). For example, a half-frame may include five 1 ms subframes (SFs). For example, a subframe may be divided into one or more slots, and a number of slots in the subframe may be determined according to a subcarrier spacing (SCS). For example, each slot may include 12 or 14 orthogonal frequency division multiplexing/multiple access (OFDM)(A) symbols according to a cyclic prefix (CP).

For example, in case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

For example, OFDM(A) numerology (e.g., SCS, CP length, etc.) may be set differently between a plurality of cells aggregated for a UE. Accordingly, an (absolute time) interval of a time resource (e.g., a subframe, a slot, or a transmit time interval (TTI)) composed of the same number of symbols may be set differently between aggregated cells. For example, in the present disclosure, a time resource such as a subframe, a slot, a TTI, and the like may be referred to as a time unit.

For example, a plurality of numerologies or SCSs for supporting various services may be supported. For example, in a case where a SCS is 15 kHz, a wide area in traditional cellular bands may be supported, and in a case where a SCS is 30 kHz/60 kHz, a dense-urban, a lower latency, and a wider carrier bandwidth may be supported. For example, in a case where a SCS is 60 kHz or higher, a bandwidth greater than 24.25 GHz may be supported to overcome phase noise.

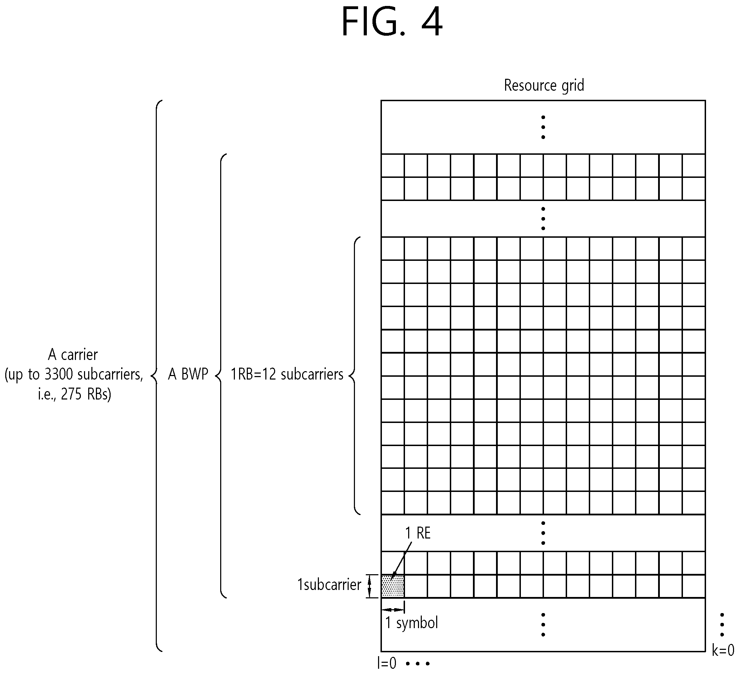

FIG. 4 shows a slot structure of a frame according to an embodiment of the present disclosure. The embodiment of FIG. 4 may be combined with various embodiments of the present disclosure.

Referring to FIG. 4, for example, a slot may include a plurality of symbols in a time domain. For example, a carrier may include a plurality of subcarriers in a frequency domain. For example, a resource block (RB) may be defined as a plurality of consecutive subcarriers in a frequency domain. For example, a bandwidth part (BWP) may be defined as a plurality of consecutive (physical) resource blocks ((P)RBs) in a frequency domain, and may correspond to one numerology (e.g., SCS, CP length, etc.). For example, a carrier may include up to N BWPs (here, N is a positive integer). For example, data communication may be performed through an activated BWP. For example, each element may be referred to as a resource element (RE) in a resource grid, and one complex symbol may be mapped.

For example, a BWP may be a consecutive set of PRBs in a given numerology. For example, a PRB may be selected from a consecutive subset of common resource blocks (CRBs) for a given numerology on a given carrier.

For example, a BWP may be at least any one of an active BWP, an initial BWP, and/or a default BWP. For example, a UE may not monitor downlink radio link quality in a DL BWP other than an active downlink (DL) BWP on a primary cell (PCell). For example, a UE may not receive a physical downlink control channel (PDCCH), a physical downlink shared channel (PDSCH), or a channel state information-reference signal (CSI-RS) (except for radio resource management (RRM)) outside an active DL BWP. For example, a UE may not trigger channel state information (CSI) reporting for an inactive DL BWP. For example, a UE may not transmit a physical uplink control channel (PUCCH) or a physical uplink shared channel (PUSCH) outside an active uplink (UL) BWP. For example, in a case of downlink, an initial BWP may be given as a consecutive resource block (RB) set for a remaining minimum system information (RMSI) control resource set (CORESET) (configured by a physical broadcast channel (PBCH)). For example, in a case of uplink, an initial BWP may be given by a system information block (SIB) for a random access procedure. For example, a default BWP may be configured by a higher layer. For example, an initial value of a default BWP may be an initial DL BWP. For energy saving, if a UE fails to detect downlink control information (DCI) for a certain period, a UE may switch an active BWP of the UE to a default BWP.

In the present disclosure, a PSCCH may be replaced with a control channel, a physical control channel, a control channel related to a sidelink, a physical control channel related to a sidelink, an inter-device physical control channel, and the like. In the present disclosure, a PSSCH may be replaced with a shared channel, a physical shared channel, a shared channel related to a sidelink, a physical shared channel related to a sidelink, an inter-device physical shared channel, and the like. For example, SL communication may be replaced with inter-device communication. For example, in a term referring to various channels and/or signals related to SL communication, an SL part may be replaced with "inter-device".

In the present disclosure, PUCCH may be replaced with a control channel, a physical control channel, a control channel related to uplink, a physical control channel related to uplink, a device-to-base station physical control channel, a UE-to-base station physical control channel, or the like. In the present disclosure, PUSCH may be replaced with a shared channel, a physical shared channel, a shared channel related to uplink, a physical shared channel related to uplink, a device-to-base station physical shared channel, a UE-to-base station physical shared channel, or the like. For example, UL communication may be replaced with UE-to-base station communication or device-to-base station communication. For example, in a term referring to various channels and/or signals related to UL communication, the UL portion may be replaced with "device-to-base station" or "UE-to-base station".

In the present disclosure, PDCCH may be replaced with a control channel, a physical control channel, a control channel related to downlink, a physical control channel related to downlink, a base station-to-device physical control channel, a base station-to-UE physical control channel, or the like. In the present disclosure, PDSCH may be replaced with a shared channel, a physical shared channel, a shared channel related to downlink, a physical shared channel related to downlink, a base station-to-device physical shared channel, a base station-to-UE physical shared channel, or the like. For example, DL communication may be replaced with base station-to-device communication or base station-to-UE communication. For example, in a term referring to various channels and/or signals related to DL communication, the DL portion may be replaced with "base station-to-device" or "base station-to-UE".

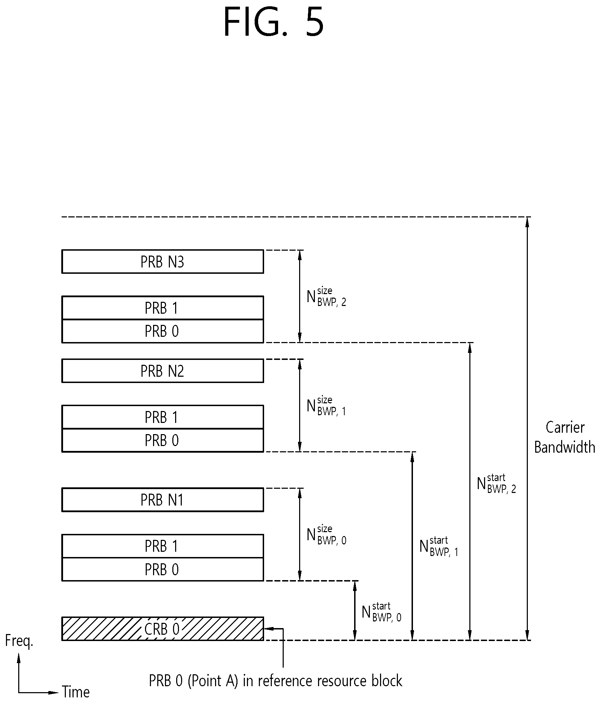

FIG. 5 shows an example of a BWP according to an embodiment of the present disclosure. The embodiment of FIG. 5 may be combined with various embodiments of the present disclosure. In an embodiment of FIG. 5, it is assumed that there are three BWPs.

Referring to FIG. 5, for example, a common resource block (CRB) may be a carrier resource block numbered from one end to the other end of a carrier band, and a PRB may be a resource block numbered within each BWP. For example, Point A may indicate a common reference point for a resource block grid.

For example, a BWP may be configured by Point A, an offset (N^{start}_{BWP}) from Point A, and a bandwidth (N^{size}_{BWP}). For example, Point A may be an external reference point of a PRB of a carrier in which subcarrier 0 of all numerologies (e.g., all numerologies supported by a network in the corresponding carrier) is aligned. For example, an offset may be a PRB interval between the lowest subcarrier and Point A in a given numerology. For example, a bandwidth may be the number of PRBs in a given numerology.

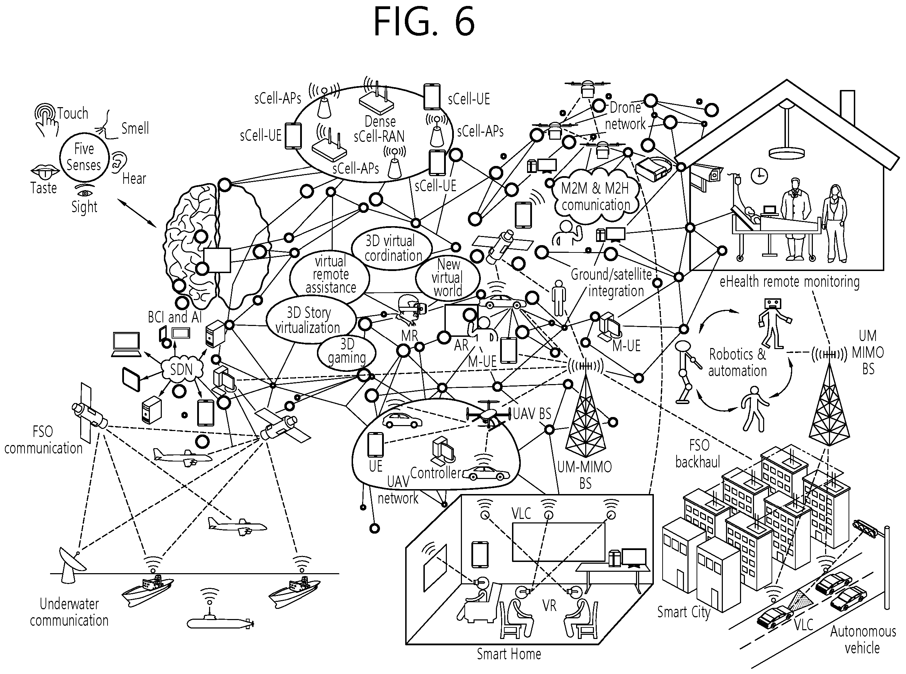

FIG. 6 shows a communication structure providable in a 6G system according to an embodiment of the present disclosure. The embodiment of FIG. 6 may be combined with various embodiments of the present disclosure.

As core implementation technologies of a 6G system, technologies such as artificial intelligence (AI), Terahertz (THz) communication, optical wireless technology, a free-space optical (FSO) backhaul network, massive multiple input multiple output (MIMO) technology, blockchain, 3D networking, quantum communication, an unmanned aerial vehicle, cell-free communication, wireless information and energy transfer (WIET), the integration of sensing and communication, the integration of an access backhaul network, holographic beamforming, big data analysis, and a large intelligent surface (LIS) may be adopted.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- Advanced air mobility (AAM): AAM may be a broad concept encompassing urban air mobility (UAM), regional air mobility (RAM), and an uncrewed aerial system (UAS). For example, AAM may include UAM, RAM, UAS, an uncrewed aerial vehicle (UAV), and the like.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I).
- Non-terrestrial network (NTN): NTN may show a network or a network segment using radio frequency (RF) resources mounted on a satellite (or a UAS platform). The use of an NTN service may be considered to secure a wider coverage or to provide a wireless communication service to a place where the installation of a wireless communication base station is not easy.
- Integrated sensing and communication, ISAC: Wireless sensing is a technology that uses radio frequencies to determine an object's instantaneous linear velocity, angle, distance (range), etc. to obtain information about an environment and/or the properties of an object in the environment.
- Reconfigurable intelligent surface (RIS): A RIS may be used to manipulate and enhance signal propagation in a wireless communication environment. For example, a RIS may be composed of many small antennas arranged on a surface or a meta surface, and each small antenna may actively adjust the phase, amplitude, polarization, and the like of a reflected signal. For example, a RIS may improve signal reception by adjusting the path, phase, and/or intensity of a propagating signal. For example, in a case of a RIS, the power consumption may be very low because power is consumed only for the phase and amplitude adjustment of a small antenna. For example, because a RIS may be reconfigured according to various environments, various communication requirements may be satisfied, and a RIS may effectively operate in a dynamic network environment.

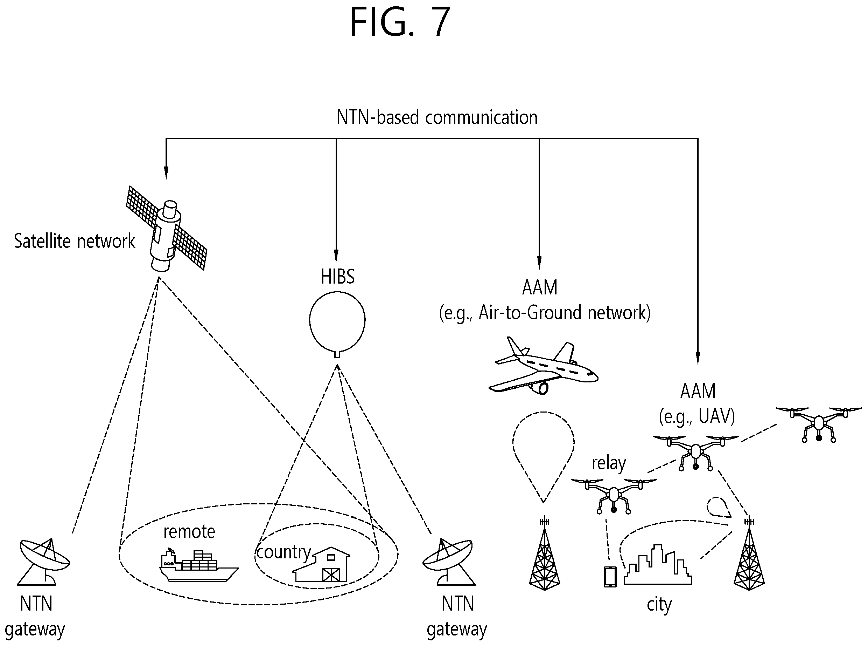

FIG. 7 shows an example of a communication scenario based on a 6G system according to an embodiment of the present disclosure. The embodiment of FIG. 7 may be combined with various embodiments of the present disclosure.

Referring to FIG. 7, for example, NTN communication may be performed based on a satellite network, high-altitude platform stations (HAPS) as international mobile telecommunications (IMT) base stations (BS) (HIBS), a UE (e.g., AAM) capable of aerial communication, and the like. For example, for the enhancement of coverage and the like, a device such as a satellite network, a HIBS, a UE (e.g., AAM) capable of aerial communication, and the like may perform a role of a relay. For example, an AAM may perform communication with a base station, a satellite network, and the like, and/or an AAM may perform direct communication with a UE, another AAM, and the like.

Hereinafter, a random access procedure is described.

A random access procedure may be classified into a contention-based random access procedure and a contention-free random access procedure.

For example, (in a contention-based random access procedure), a UE may calculate a random access radio network temporary identifier (e.g., RA-RNTI) based on a physical random access channel (e.g., PRACH) transmission occasion for transmitting a random access preamble. Thereafter, the UE may transmit the random access preamble by using the physical random access channel (e.g., PRACH) transmission occasion and the corresponding random access radio network temporary identifier (e.g., RA-RNTI).

Thereafter, a UE may start a random access response window and monitor a base station-to-UE physical control channel (e.g., PDCCH) transmission by using a random access radio network temporary identifier (e.g., RA-RNTI) in a search space within the random access response window.

Here, if a UE is performing a contention-free random access procedure, and if a base station-to-UE physical control channel (e.g., PDCCH) transmission addressed by a cell radio network temporary identifier (e.g., C-RNTI) is received, the UE may determine that the random access procedure has been successfully completed.

Here, if a UE receives a random access response including a random access preamble identifier (e.g., RAPID; random access preamble identifier) corresponding to an index of a random access preamble transmitted by the UE, the UE may determine that the random access response has been successfully received. If the transmitted random access preamble has not been selected from contention-based random access preambles, the UE may determine that the random access procedure has been successfully completed.

Alternatively, if a UE receives a base station-to-UE physical control channel (e.g., PDCCH) transmission including base station-to-UE communication resource allocation information for a random access radio network temporary identifier (e.g., RA-RNTI) calculated by the UE, and if a received random access response includes a random access preamble identifier (e.g., RAPID; random access preamble identifier) corresponding to an index of a random access preamble transmitted by the UE, the UE may determine that the random access response has been successfully received. At this time, if the random access response includes only a random access preamble identifier (e.g., RAPID), the UE may determine that the random access procedure has been successfully completed. If the random access response does not include only a random access preamble identifier (e.g., RAPID), the UE may transmit a third message (Msg3) to a base station through a UE-to-base station transmission (e.g., UL transmission) by using a temporary cell radio network temporary identifier (e.g., TC-RNTI) and a cell radio network temporary identifier (e.g., C-RNTI) received through the random access response.

Thereafter, a UE may monitor a fourth message (Msg4) from a base station. If a fourth message including a cell radio network temporary identifier (e.g., C-RNTI) transmitted by the UE is received before expiration of a contention resolution window, the UE may determine that a random access procedure has been successfully completed. For example, if a received fourth message includes a UE-to-base station resource (e.g., UL resource), the UE may transmit an ACK to the base station through the UE-to-base station resource (e.g., UL resource).

Meanwhile, in a next-generation non-terrestrial network (e.g., NTN; non-terrestrial network) system, an effective isotropically radiated power (e.g., EIRP) and/or a bandwidth (e.g., BW) for a base station-to-UE transmission (e.g., DL transmission) may be limited, and coverage enhancement for a base station-to-UE channel transmission (e.g., DL channel transmission) may be required in the above situation.

Meanwhile, within a non-terrestrial network (e.g., NTN) footprint, cell, or beam, UEs supporting a base station-to-UE communication (e.g., DL communication) coverage enhancement operation and UEs not supporting a base station-to-UE communication (e.g., DL communication) coverage enhancement operation may coexist. Accordingly, it may be necessary to minimize an impact of the base station-to-UE communication (e.g., DL communication) coverage enhancement operation on existing (e.g., legacy) UEs.

Whether and how various embodiments of the present disclosure are applied may be differently applied for a fallback base station-to-UE control information format (e.g., DCI format) and a non-fallback base station-to-UE control information format (e.g., DCI format), and/or for each base station-to-UE control information format (e.g., DCI format).

Whether various embodiments of the present disclosure are applied and a method of applying the various embodiments of the present disclosure may be differently applied for a common search space (e.g., CSS; common search space) (an entire common search space (e.g., CSS) or a part of the common search space (e.g., CSS) (Type-0 and/or Type-0A and/or Type-1 and/or Type-2 and/or Type-3)) and a UE-specific search space (e.g., USS; UE-specific search space), for a control resource set #0 (e.g., CORESET#0; control resource set #0) and a non-zero control resource set (e.g., non-zero CORESET), for each search space, and/or for each control resource set (e.g., CORESET).

Whether various embodiments of the present disclosure are applied and a method of applying the various embodiments of the present disclosure may be differently applied for each radio network temporary identifier (e.g., RNTI; radio network temporary identifier) for a base station-to-UE physical control channel (e.g., PDCCH; physical downlink control channel), and/or for each purpose of the base station-to-UE physical control channel (e.g., PDCCH) (whether the purpose is scheduling of a system information block 1 (e.g., SIB1; system information block 1) and/or whether a direct message is transmitted).

Various embodiments of the present disclosure and combinations thereof may be differently applied according to a payload type of a satellite (e.g., a regenerative payload or a transparent payload).

Various embodiments of the present disclosure and combinations thereof may be differently applied according to a type of a non-terrestrial network node (e.g., GEO (geostationary earth orbit), NGEO (non-geostationary earth orbit), LEO (low earth orbit), MEO (medium earth orbit), HAPS (high altitude platform station), or a drone), an altitude, a fixed beam footprint, or a cell-moving beam footprint, etc.

Various embodiments of the present disclosure and combinations thereof may be differently applied according to reception of a base station-to-UE physical shared channel (e.g., PDSCH; physical downlink shared channel) for initial access (e.g., reception of a random access response (e.g., RAR; random access response), reception of a fourth message (e.g., Msg4), paging, reception of system information (e.g., SI), and reception of a base station-to-UE physical shared channel (e.g., PDSCH) before (re)configuration of radio resource control (e.g., RRC)), and/or according to reception of a base station-to-UE physical shared channel (e.g., PDSCH), system information (e.g., SI), paging, or a random access response (e.g., RAR), etc., scheduled by a fallback base station-to-UE control information format (e.g., DCI format) (e.g., base station-to-UE control information format (e.g., DCI format) 1_0).

Meanwhile, in the case of a physical random access channel (e.g., PRACH; physical random access channel) transmission, if repetition of the physical random access channel (e.g., PRACH) is indicated/configured in rach-ConfigDedicated, a UE may apply the repetition number when transmitting the physical random access channel (e.g., PRACH).

Meanwhile, in the case of a physical random access channel (e.g., PRACH) transmission, if rsrp-ThresholdMsg1-ReptitoinNumX is configured, and/or if a reference signal received power (e.g., RSRP) of a pathloss reference for base station-to-UE communication (e.g., DL communication) of a UE is less than rsrp-ThresholdMsg1-ReptitoinNumX, a repetition number X may be included in a physical random access channel (e.g., PRACH) repetition available set.

Meanwhile, for physical random access channel (e.g., PRACH) repetition, a random access radio network temporary identifier (e.g., RA-RNTI) is determined based on a last valid physical random access channel (e.g., PRACH) occasion within a set of physical random access channel (e.g., PRACH) occasions.

Meanwhile, for physical random access channel (e.g., PRACH) repetition, if a UE fails to receive a suitable random access response (e.g., RAR) within a random access response (e.g., RAR) window, and/or if a number of physical random access channel (e.g., PRACH) transmissions for a current repetition number reaches a certain level (e.g., a value indicated/configured through system information block (e.g., SIB) or radio resource control (e.g., RRC)), the UE may perform physical random access channel (e.g., PRACH) retransmission by using a next higher physical random access channel (e.g., PRACH) repetition number.

For example, through a physical random access channel (e.g., PRACH) transmission (different physical random access channel (e.g., PRACH) resources and/or repetition numbers), a UE may indicate to a base station whether the UE supports a base station-to-UE communication (e.g., DL communication) coverage mode for a random access response (e.g., RAR) (e.g., transmission using repetition or expanded resources for a base station-to-UE physical control channel (e.g., PDCCH) and/or a base station-to-UE physical shared channel (e.g., PDSCH) corresponding to the random access response (e.g., RAR)) and/or whether the base station-to-UE communication coverage mode is required.

For example, a UE may indicate to a base station, through a physical random access channel (e.g., PRACH) transmission (different physical random access channel (e.g., PRACH) resources and/or repetition numbers) and/or through a third message (e.g., Msg3), whether the UE supports a base station-to-UE communication (e.g., DL communication) coverage mode for a base station-to-UE physical control channel (e.g., PDCCH) and/or a base station-to-UE physical shared channel (e.g., PDSCH) corresponding to a fourth message (e.g., Msg4) (e.g., transmission using repetition or expanded resources for a base station-to-UE physical control channel (e.g., PDCCH) and/or a base station-to-UE physical shared channel (e.g., PDSCH) corresponding to a random access response (e.g., RAR)) and/or whether the base station-to-UE communication coverage mode is required.

For example, even in a licensed band, when a base station-to-UE communication (e.g., DL communication) coverage enhancement mode for a random access response (e.g., RAR) is activated, a size of a random access response (e.g., RAR) window may be allowed to exceed 10 msec.

For example, in a licensed band, and/or when a random access response (e.g., RAR) window size is configured to exceed 10 msec, a base station-to-UE communication (e.g., DL communication) coverage mode (e.g., transmission using repetition or expanded resources for a base station-to-UE physical control channel (e.g., PDCCH) and/or a base station-to-UE physical shared channel (e.g., PDSCH) corresponding to a random access response (e.g., RAR)) for a base station-to-UE physical control channel (e.g., PDCCH) and/or a base station-to-UE physical shared channel (e.g., PDSCH) for the random access response (e.g., RAR) may be activated.

For example, in an unlicensed band, and/or when a random access response (e.g., RAR) window size is configured to exceed 40 msec, a base station-to-UE communication (e.g., DL communication) coverage mode (e.g., transmission using repetition or expanded resources for a base station-to-UE physical control channel (e.g., PDCCH) and/or a base station-to-UE physical shared channel (e.g., PDSCH) corresponding to a random access response (e.g., RAR)) for a base station-to-UE physical control channel (e.g., PDCCH) and/or a base station-to-UE physical shared channel (e.g., PDSCH) for the random access response (e.g., RAR) may be activated.

Meanwhile, inter-slot repetition and/or repetition between a plurality of base station-to-UE physical shared channel (e.g., PDSCH) units may be supported for a base station-to-UE physical shared channel (e.g., PDSCH) scheduled by a base station-to-UE physical control channel (e.g., PDCCH) CRC-masked with a system information radio network temporary identifier (e.g., SI-RNTI), a random access radio network temporary identifier (e.g., RA-RNTI), and/or a paging radio network temporary identifier (e.g., P-RNTI), and/or for a base station-to-UE physical shared channel (e.g., PDSCH) scheduled by fallback base station-to-UE control information (e.g., DCI) (e.g., base station-to-UE control information format (e.g., DCI format) 1_0), and/or for a base station-to-UE physical shared channel (e.g., PDSCH) scheduled before radio resource control (e.g., RRC) configuration.

For example, a repetition method and/or a repetition number for the base station-to-UE physical shared channel (e.g., PDSCH) may be indicated through a base station-to-UE control information format (e.g., DCI format) corresponding to the base station-to-UE physical shared channel (e.g., PDSCH). For example, a time interval between a start, an end, or a slot of a latest-in-time base station-to-UE physical control channel (e.g., PDCCH) reception corresponding to the base station-to-UE control information format (e.g., DCI format) and a start, an end, or a slot of a base station-to-UE physical shared channel (e.g., PDSCH) reception may be greater than or equal to a certain level (a predefined value, a value configured through a system information block (e.g., SIB) and/or radio resource control (e.g., RRC), or a base station-to-UE physical control channel (e.g., PDCCH)/base station-to-UE control information (e.g., DCI) decoding/processing time). This may be for allowing a corresponding base station-to-UE control information format (e.g., DCI format) to be received and decoded before performing a base station-to-UE physical shared channel (e.g., PDSCH) reception operation, thereby allowing a UE to determine whether to perform a reception operation for a repetition mode or a reception operation for a single transmission.

For example, a repetition method and/or a repetition number for the base station-to-UE physical shared channel (e.g., PDSCH) may be configured through a system information block (e.g., SIB) and/or radio resource control (e.g., RRC) for each search space, for each control resource set (e.g., CORESET), and/or for each aggregation level for a base station-to-UE physical control channel (e.g., PDCCH) corresponding to the base station-to-UE physical shared channel (e.g., PDSCH). For example, a repetition method and/or a repetition number for the base station-to-UE physical shared channel (e.g., PDSCH) may be determined based on reception of a base station-to-UE physical control channel (e.g., PDCCH) corresponding to the base station-to-UE physical shared channel (e.g., PDSCH).

For example, a repetition method and/or a repetition number for a base station-to-UE physical shared channel (e.g., PDSCH) for a random access response (e.g., RAR) and/or a fourth message (e.g., Msg4) may be configured through a system information block (e.g., SIB) and/or radio resource control (e.g., RRC) for each repetition number or repetition group of a physical random access channel (e.g., PRACH) corresponding to the random access response (e.g., RAR) and/or the fourth message (e.g., Msg4), or may use the same repetition number. For example, if a plurality of repetition numbers of a physical random access channel (e.g., PRACH) corresponding to the random access response (e.g., RAR) and/or the fourth message (e.g., Msg4) exist, a repetition number of a base station-to-UE physical shared channel (e.g., PDSCH) may be determined based on a minimum value, a maximum value, or an average value among various repetition numbers of the physical random access channel (e.g., PRACH). For example, if a plurality of repetition numbers of a physical random access channel (e.g., PRACH) corresponding to the random access response (e.g., RAR) and/or the fourth message (e.g., Msg4) exist, the repetition number of the physical random access channel (e.g., PRACH) may be determined based on a minimum value, a maximum value, or an average value among various repetition numbers of the physical random access channel (e.g., PRACH). For example, if a plurality of repetition numbers of a physical random access channel (e.g., PRACH) corresponding to the random access response (e.g., RAR) and/or the fourth message (e.g., Msg4) exist, a repetition number of a base station-to-UE physical shared channel (e.g., PDSCH) may be determined based on the repetition numbers of the physical random access channel (e.g., PRACH).

For example, a repetition method and/or a repetition number for a base station-to-UE physical shared channel (e.g., PDSCH) for a fourth message (e.g., Msg4) may be configured through a system information block (e.g., SIB) and/or radio resource control (e.g., RRC) for each repetition number or repetition group of a UE-to-base station physical shared channel (e.g., PUSCH) of a third message (e.g., Msg3) corresponding to the fourth message (e.g., Msg4), or may use the same repetition number.

For example, a repetition method and/or a repetition number for a base station-to-UE physical shared channel (e.g., PDSCH) for a fourth message (e.g., Msg4) may be indicated by using a specific field of a base station-to-UE control information format (e.g., DCI format) scheduling the base station-to-UE physical shared channel (e.g., PDSCH) of the fourth message (e.g., Msg4). For example, the specific field of the base station-to-UE control information format (e.g., DCI format) may be a downlink assignment index (e.g., DAI; downlink assignment index) field, and/or the downlink assignment index (e.g., DAI) field may jointly indicate a repetition method and/or a repetition number for the fourth message (e.g., Msg4) base station-to-UE physical shared channel (e.g., PDSCH) and/or a repetition method and/or a repetition number for a UE-to-base station physical control channel (e.g., PUCCH) corresponding to the fourth message (e.g., Msg4) base station-to-UE physical shared channel (e.g., PDSCH).

For example, if a base station-to-UE physical shared channel (e.g., PDSCH) for a random access response (e.g., RAR) includes random access response (e.g., RAR) data (e.g., MAC PDU) for a case in which a physical random access channel (e.g., PRACH) is repeated (at least), the base station-to-UE physical shared channel (e.g., PDSCH) may be repeatedly transmitted for the entire random access response (e.g., RAR). For example, in the above case, even for random access response (e.g., RAR) data (e.g., MAC PDU) for a physical random access channel (e.g., PRACH) that does not perform repetition, if the random access response (e.g., RAR) data (e.g., MAC PDU) is multiplexed with random access response (e.g., RAR) data (e.g., MAC PDU) for another physical random access channel (e.g., PRACH) repetition, base station-to-UE physical shared channel (e.g., PDSCH) repeated transmission may be performed. Through this, for base station-to-UE physical shared channel (e.g., PDSCH) repetition, a UE may perform soft/chase combining even for an initial transmission, thereby improving decoding performance.

According to an embodiment of the present disclosure, a base station-to-UE physical shared channel (e.g., PDSCH) for a random access response (e.g., RAR) may be repeatedly transmitted for all or some of random access response (e.g., RAR) data (e.g., PDU) for a case in which a physical random access channel (e.g., PRACH) is repeated. For example, in the above case, for random access response (e.g., RAR) data (e.g., MAC PDU) for a physical random access channel (e.g., PRACH) that does not perform repetition, the random access response (e.g., RAR) data (e.g., MAC PDU) may not be included in a subsequent base station-to-UE physical shared channel (e.g., PDSCH) repeated transmission, and only random access response (e.g., RAR) data (e.g., MAC PDU) for physical random access channel (e.g., PRACH) repetition may be multiplexed and repeatedly transmitted through the base station-to-UE physical shared channel (e.g., PDSCH).

For example, a base station-to-UE physical shared channel (e.g., PDSCH) for a random access response (e.g., RAR) may be repeatedly transmitted (respectively) for all or some of random access response (e.g., RAR) data (e.g., PDU) corresponding thereto for each repetition number or repetition group of a physical random access channel (e.g., PRACH).

In an embodiment of the present disclosure, a physical random access channel (e.g., PRACH) repetition number may be an actual repetition number of physical random access channel (e.g., PRACH) transmissions of a physical random access channel (e.g., PRACH) corresponding to a random access response (e.g., RAR) and/or a fourth message (e.g., Msg4), and/or may refer to a candidate value of a repetition number that may be used for physical random access channel (e.g., PRACH) transmission according to configuration of a reference signal received power (e.g., RSRP) measurement value and a reference signal received power (e.g., RSRP) threshold value, or a minimum value or a maximum value thereof.

According to an embodiment of the present disclosure, when a repetition method and/or a repetition number for a base station-to-UE physical shared channel (e.g., PDSCH) is indicated through base station-to-UE control information (e.g., DCI), the repetition method and/or the repetition number may be indicated in a form in which some of reserved bit fields in a base station-to-UE control information format (e.g., DCI format) are reused, and/or in a form in which repetition information and/or repetition number information is included in information corresponding to each row indicated by a time domain resource assignment.

According to an embodiment of the present disclosure, repetition for a base station-to-UE physical shared channel (e.g., PDSCH) for fallback base station-to-UE control information (e.g., DCI) may be applied to a base station-to-UE physical shared channel (e.g., PDSCH) scheduled by non-fallback base station-to-UE control information (e.g., DCI) as well (at least before aggregated slot information for base station-to-UE communication (e.g., DL communication) is configured through radio resource control (e.g., RRC)).

For example, a UE may report, to a base station, information related to whether repetition transmission is required and/or a (preferred) repetition number for a base station-to-UE physical shared channel (e.g., PDSCH) including system information (e.g., SI), paging, a random access response (e.g., RAR), and/or a fourth message (e.g., Msg4). For example, the base station may determine the report related to the repetition information based on a reference signal received power (e.g., RSRP) report and/or a reference signal received quality (e.g., RSRQ) report based on a base station-to-UE reference signal (e.g., DL RS) of the UE.

Meanwhile, in a region in which a signal-to-interference-plus-noise ratio (e.g., SINR) is low, a repetition gain may be greater than a coding gain, and accordingly, it may be advantageous to change a redundancy version (e.g., RV; redundancy version) setting among repetitions of a base station-to-UE physical shared channel (e.g., PDSCH).

For example, upon repetition of a base station-to-UE physical shared channel (e.g., PDSCH), the same redundancy version (e.g., RV) value may be applied for every N (consecutive) repetitions of the base station-to-UE physical shared channel (e.g., PDSCH). For example, the redundancy version (e.g., RV) value and/or pattern may be indicated in base station-to-UE control information (e.g., DCI), and/or may be configured through radio resource control (e.g., RRC). For example, the N value may be indicated in base station-to-UE control information (e.g., DCI) and/or configured through radio resource control (e.g., RRC).

For example, the consecutive repetitions of the base station-to-UE physical shared channel (e.g., PDSCH) may target a base station-to-UE physical shared channel (e.g., PDSCH) actually transmitted by a base station, and/or may target a base station-to-UE physical shared channel (e.g., PDSCH) allocated for repetition of the base station-to-UE physical shared channel (e.g., PDSCH) according to scheduling/semi-persistent scheduling (e.g., SPS) activation of base station-to-UE control information (e.g., DCI).

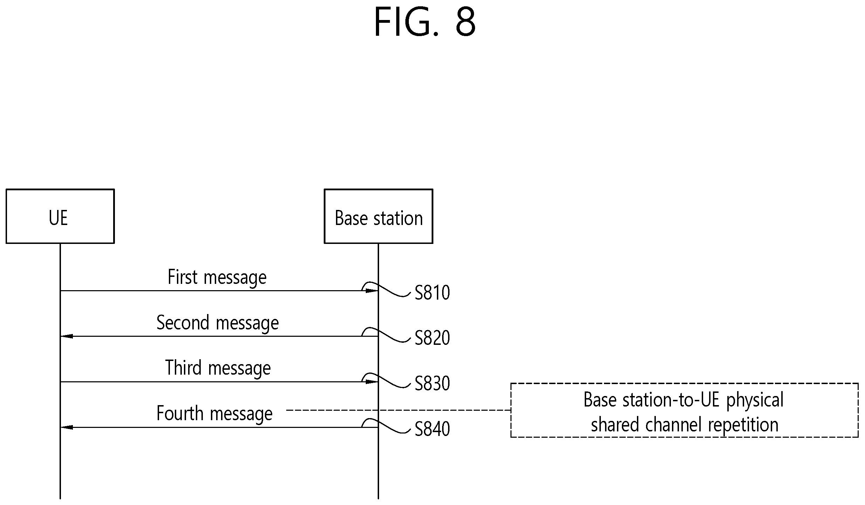

FIG. 8 shows an example in which base station-to-UE physical shared channel repetition is performed in a random access procedure, according to an embodiment of the present disclosure. The embodiment of FIG. 8 may be combined with various embodiments of the present disclosure.

Referring to FIG. 8, in step S810, a UE may transmit a first message to a base station. For example, the first message may be a random access preamble. In step S820, the base station may transmit a second message to the UE. For example, the second message may be a response to the first message. For example, the second message may be a random access response.

In step S830, a UE may transmit a third message to a base station. For example, the third message may be a transmission based on a resource scheduled by the second message. In step S840, the base station may transmit a fourth message to the UE. For example, the fourth message may be a base station-to-UE physical shared channel (e.g., PDSCH) transmission. At this time, the base station-to-UE physical shared channel (e.g., PDSCH) transmission transmitted herein may be repeatedly transmitted. For example, repeated transmission of the base station-to-UE physical shared channel (e.g., PDSCH) performed herein (or, base station-to-UE physical shared channel (e.g., PDSCH) repetition) may be performed according to various methods described in the present disclosure.

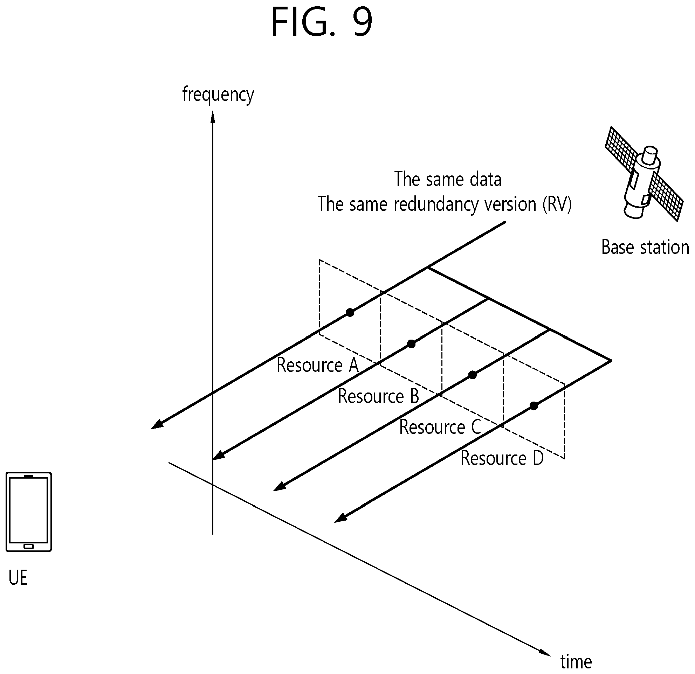

FIG. 9 shows base station-to-UE physical shared channel (e.g., PDSCH) repetition, according to an embodiment of the present disclosure. The embodiment of FIG. 9 may be combined with various embodiments of the present disclosure.

Referring to FIG. 9, resources (resource A, resource B, resource C, and resource D) in which base station-to-UE physical shared channel (e.g., PDSCH) repetition is performed are shown. A base station (e.g., a non-terrestrial network (e.g., NTN)) may transmit the same data (e.g., MAC PDU) to a UE through base station-to-UE physical shared channels (e.g., PDSCHs) by using the resources. The operation may be referred to as base station-to-UE physical shared channel (e.g., PDSCH) repetition. For example, redundancy versions (e.g., RVs) related to respective transmissions performed in the base station-to-UE physical shared channel (e.g., PDSCH) repetition may all be the same.

The proposed method may be applied to a device described below. First, a processor (202) of a receiving UE may configure at least one bandwidth part (e.g., BWP; bandwidth part). Then, the processor (202) of the receiving UE may control a transceiver (206) of the receiving UE to receive, from a transmitting UE, an inter-UE communication (e.g., SL communication)-related physical channel and/or an inter-UE communication (e.g., SL communication)-related reference signal on the at least one bandwidth part (e.g., BWP).

A non-terrestrial network (e.g., NTN; non-terrestrial network) environment may refer to a case in which a base station or a network is not located on the ground (e.g., a case in which a base station or a network is flying in an orbit). In this case, in the non-terrestrial network (e.g., NTN) environment, detection performance for a base station-to-UE physical shared channel (e.g., PDSCH) including a fourth message (e.g., MSG4; message 4) related to a random access procedure may be degraded. In addition, according to the related art, there may be no field in base station-to-UE control information (e.g., DCI) scheduling a base station-to-UE physical shared channel (e.g., PDSCH) including a fourth message (e.g., MSG4) related to a random access procedure, the field being capable of indicating whether a base station-to-UE physical shared channel (e.g., PDSCH) repetition operation is applied.

According to an embodiment of the present disclosure, when communication between a base station and a UE is performed, redundancy versions (e.g., RV; redundancy version) related to a plurality of transmissions may be the same. For example, a number of transmissions having the same redundancy version (e.g., RV) may be configured (for the UE) through base station-to-UE control information (e.g., DCI) or RRC. For example, according to an embodiment of the present disclosure, the UE may report, to the base station through a third message (e.g., Msg3) related to a random access procedure, whether repetition of a base station-to-UE physical shared channel (e.g., PDSCH) including a fourth message (e.g., MSG4) related to the random access procedure is supported. According to an embodiment of the present disclosure, repetition of a base station-to-UE physical shared channel (e.g., PDSCH) including a fourth message (e.g., MSG4) related to a random access procedure and a feedback repetition number (e.g., HARQ-ACK feedback repetition number) for the base station-to-UE physical shared channel (e.g., PDSCH) including the fourth message (e.g., MSG4) related to the random access procedure may be jointly indicated through a downlink assignment index (e.g., DAI; downlink assignment index) field of base station-to-UE control information (e.g., DCI) scheduling the base station-to-UE physical shared channel (e.g., PDSCH) including the fourth message (e.g., MSG4) related to the random access procedure.

According to various embodiments of the present disclosure, smoother communication may be enabled by prioritizing a repetition gain in a non-terrestrial network (e.g., NTN) environment in which a signal-to-interference-plus-noise ratio (e.g., SINR) is likely to be low. For example, according to various embodiments of the present disclosure, repetition of a base station-to-UE physical shared channel (e.g., PDSCH) including a fourth message (e.g., MSG4) related to a random access procedure may be efficiently performed.

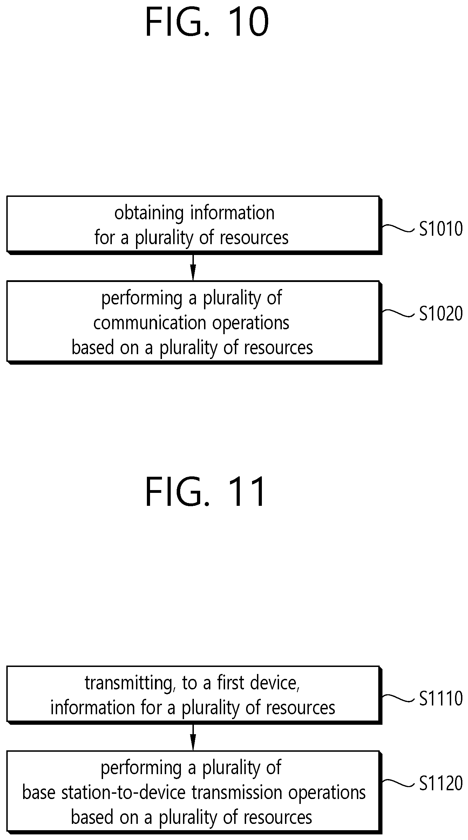

FIG. 10 shows a procedure of a method that may be performed by a first device according to an embodiment of the present disclosure. The embodiment of FIG. 10 may be combined with various embodiments of the present disclosure.

Referring to FIG. 10, in step S1010, a first device may obtain information for a plurality of resources. In step S1020, the first device may perform a plurality of communication operations based on the plurality of resources. For example, redundancy versions related to a plurality of transmissions related to the plurality of communication operations may be the same.

For example, the plurality of communication operations may include transmission repetition operations for the same data.

For example, additionally, the first device may: receive, from a base station, information related to whether the transmission repetition operations are performed, through base station-to-device control information or radio resource control signaling. For example, the plurality of communication operations may be performed based on the information related to whether the transmission repetition operations are performed.

For example, a number of the plurality of resources and a number of the plurality of communication operations may be the same.

For example, additionally, the first device may: receive, from a base station, information related to a number of the plurality of communication operations, through base station-to-device control information or radio resource control signaling. For example, the plurality of communication operations may be performed as many times as the number of the plurality of communication operations.

For example, additionally, the first device may: transmit, to the base station, information related to a preferred repetition number. For example, the information related to the number of the plurality of communication operations may be determined based on the information related to the preferred repetition number.

For example, the plurality of communication operations may be reception operations related to base station-to-device communication.

For example, a base station related to the base station-to-device communication may be included in a non-terrestrial network.

For example, additionally, the first device may: transmit, to a base station related to the base station-to-device communication, information related to whether transmission repetition is required. For example, the reception operations related to the base station-to-device communication may be performed based on the information related to whether the transmission repetition is required.

For example, the plurality of communication operations may be transmission operations related to device-to-base station communication.

For example, the plurality of communication operations may be transmission operations or reception operations related to inter-device communication.

For example, the plurality of communication operations may be operations related to a random access procedure.

The above-described embodiment may be applied to various devices described below. First, a processor 102 of a first device 100 may obtain information for a plurality of resources. And, the processor 102 of the first device 100 may control a transceiver 106 to perform a plurality of communication operations based on the plurality of resources. For example, redundancy versions related to a plurality of transmissions related to the plurality of communication operations may be the same.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: obtain information for a plurality of resources; and perform a plurality of communication operations based on the plurality of resources, wherein redundancy versions related to a plurality of transmissions related to the plurality of communication operations may be the same.

For example, the plurality of communication operations may include transmission repetition operations for the same data.

For example, additionally, the first device may: receive, from a base station, information related to whether the transmission repetition operations are performed, through base station-to-device control information or radio resource control signaling. For example, the plurality of communication operations may be performed based on the information related to whether the transmission repetition operations are performed.

For example, a number of the plurality of resources and a number of the plurality of communication operations may be the same.

For example, additionally, the instructions may cause the first device to: receive, from a base station, information related to a number of the plurality of communication operations, through base station-to-device control information or radio resource control signaling. For example, the plurality of communication operations may be performed as many times as the number of the plurality of communication operations.

For example, additionally, the instructions may cause the first device to: transmit, to the base station, information related to a preferred repetition number. For example, the information related to the number of the plurality of communication operations may be determined based on the information related to the preferred repetition number.

For example, the plurality of communication operations may be reception operations related to base station-to-device communication.

For example, a base station related to the base station-to-device communication may be included in a non-terrestrial network.

For example, additionally, the instructions may cause the first device to: transmit, to a base station related to the base station-to-device communication, information related to whether transmission repetition is required. For example, the reception operations related to the base station-to-device communication may be performed based on the information related to whether the transmission repetition is required.

For example, the plurality of communication operations may be transmission operations related to device-to-base station communication.

For example, the plurality of communication operations may be transmission operations or reception operations related to inter-device communication.

For example, the plurality of communication operations may be operations related to a random access procedure.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, may cause the first device to: obtain information for a plurality of resources; and perform a plurality of communication operations based on the plurality of resources, wherein redundancy versions related to a plurality of transmissions related to the plurality of communication operations may be the same.

According to an embodiment of the present disclosure, a non-transitory computer-readable storage medium storing instructions may be proposed. For example, the instructions, when executed, may cause a first device to: obtain information for a plurality of resources; and perform a plurality of communication operations based on the plurality of resources, wherein redundancy versions related to a plurality of transmissions related to the plurality of communication operations may be the same.

FIG. 11 shows a procedure of a method that may be performed by a second device according to an embodiment of the present disclosure. The embodiment of FIG. 11 may be combined with various embodiments of the present disclosure.

Referring to FIG. 11, in step S1110, a second device may transmit, to a first device, information for a plurality of resources. In step S1120, the second device may perform a plurality of base station-to-device transmission operations based on the plurality of resources. For example, redundance versions related to the plurality of base station-to-device transmission operations may be the same.

For example, the plurality of base station-to-device transmission operations may be repeated transmissions of the same base station-to-device physical shared channel transmission.

The above-described embodiment may be applied to various devices described below. First, a processor 202 of a second device 200 may control a transceiver 206 to transmit, to a first device 100, information for a plurality of resources. And, the processor 202 of a second device 200 may control the transceiver 206 to perform a plurality of base station-to-device transmission operations based on the plurality of resources. For example, redundance versions related to the plurality of base station-to-device transmission operations may be the same.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, information for a plurality of resources; and perform a plurality of base station-to-device transmission operations based on the plurality of resources, wherein redundance versions related to the plurality of base station-to-device transmission operations may be the same.

For example, the plurality of base station-to-device transmission operations may be repeated transmissions of the same base station-to-device physical shared channel transmission.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

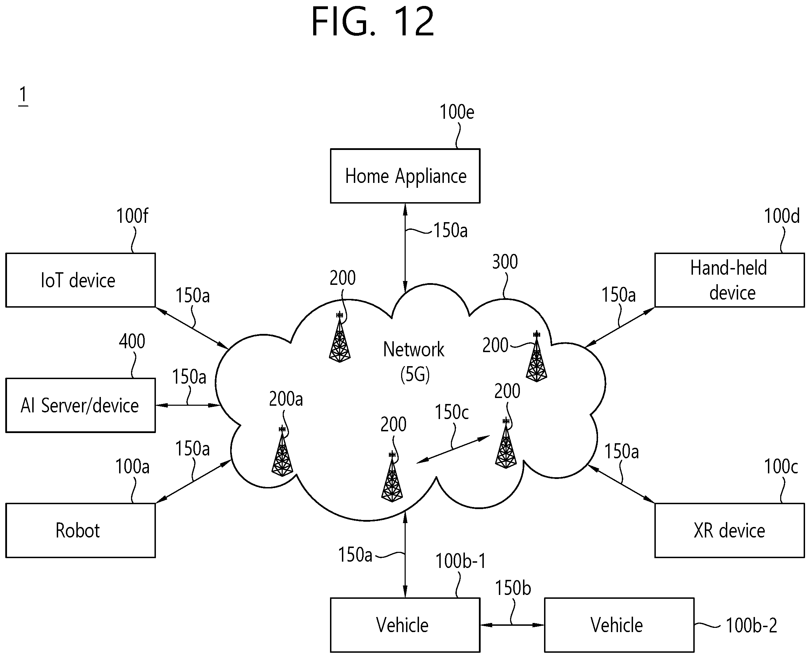

FIG. 12 shows a communication system 1, based on an embodiment of the present disclosure. The embodiment of FIG. 12 may be combined with various embodiments of the present disclosure.

Referring to FIG. 12, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone) and/or Aerial Vehicle (AV) (e.g., Advanced Air Mobility (AAM)). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

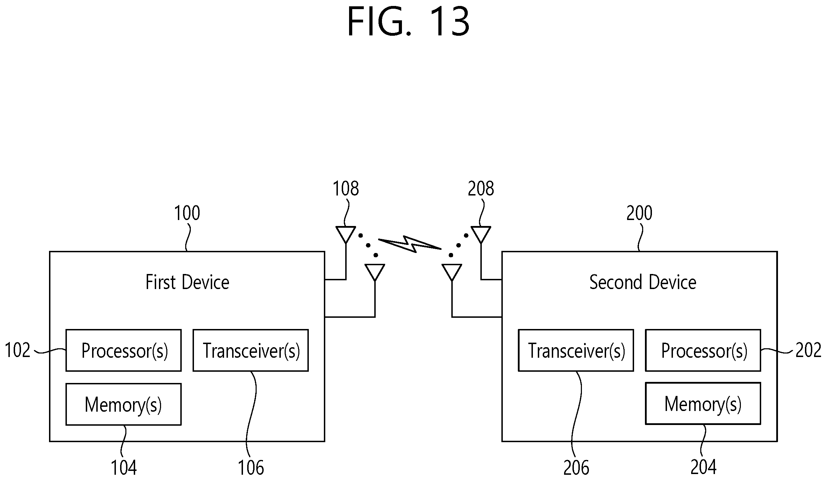

FIG. 13 shows wireless devices, based on an embodiment of the present disclosure. The embodiment of FIG. 13 may be combined with various embodiments of the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

For example, in the following, description for a first wireless device (or apparatus) and a second wireless device (or apparatus) may be extended to a wireless device (or apparatus) corresponding to a third wireless device 300 (or apparatus) or a subsequent reference number. For example, a reference number of a processor of the third wireless device 300 may be 302, and a reference number of a transceiver may be 306.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

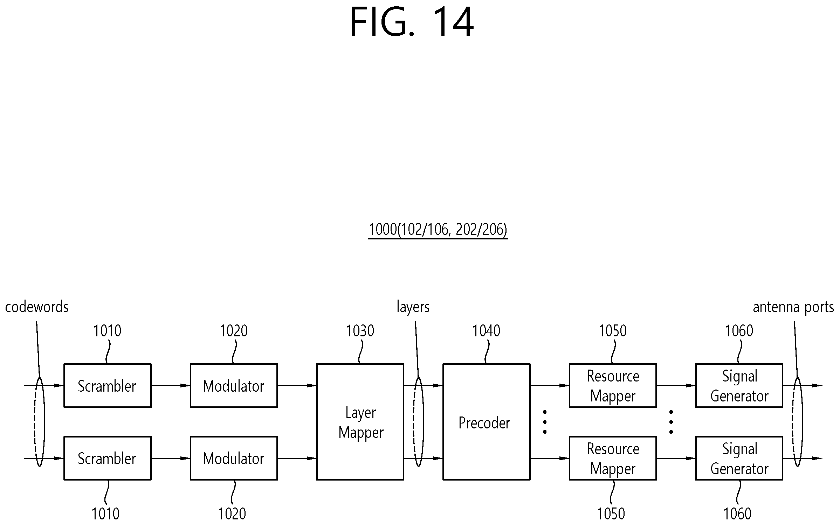

FIG. 14 shows a signal process circuit for a transmission signal, based on an embodiment of the present disclosure. The embodiment of FIG. 14 may be combined with various embodiments of the present disclosure.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a UE-to-base station physical shared channel (e.g., PUSCH) and a base station-to-UE physical shared channel (e.g., PDSCH)).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

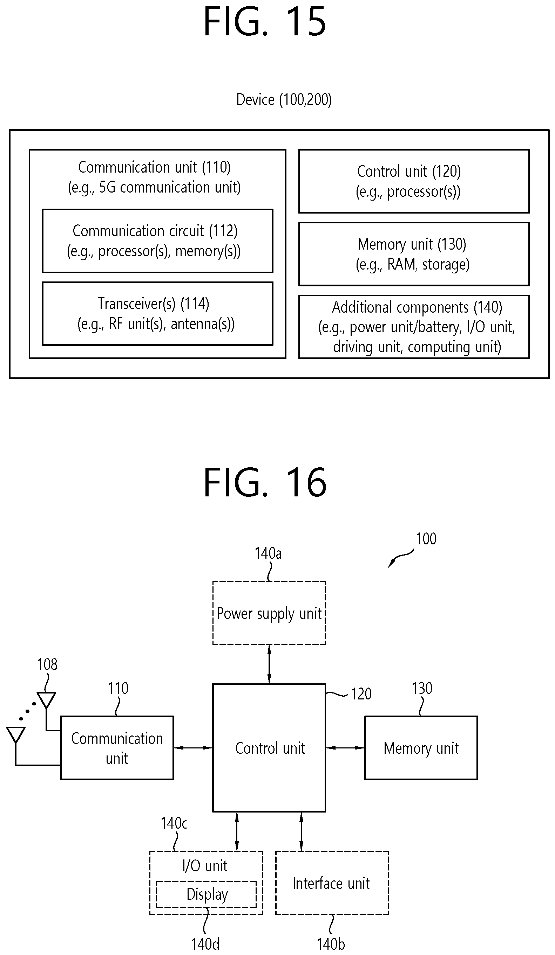

FIG. 15 shows another example of a wireless device, based on an embodiment of the present disclosure. The wireless device may be implemented in various forms according to a use-case/service (refer to FIG. 12). The embodiment of FIG. 15 may be combined with various embodiments of the present disclosure.

Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 15 will be described in detail with reference to the drawings.

FIG. 16 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 16 may be combined with various embodiments of the present disclosure.

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

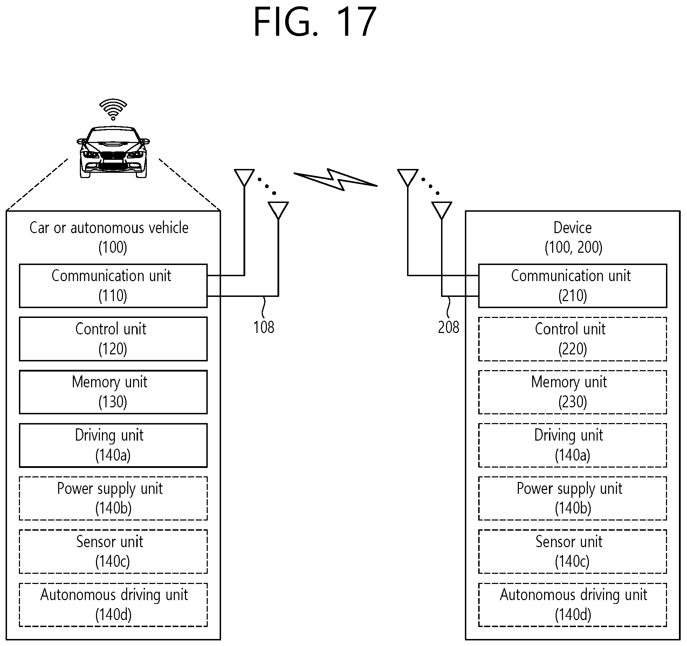

FIG. 17 shows a vehicle or an autonomous vehicle according to an embodiment of the present disclosure. The vehicle or the autonomous vehicle may be implemented as a mobile robot, a vehicle, a train, a manned or unmanned aerial vehicle (AV), a vessel, or the like. The embodiment of FIG. 17 may be combined with various embodiments of the present disclosure.

Referring to FIG. 17, a vehicle or an autonomous vehicle (100) may include an antenna unit (108), a communication unit (110), a control unit (120), a driving unit (140a), a power supply unit (140b), a sensor unit (140c), and an autonomous driving unit (140d). The antenna unit (108) may be configured as a part of the communication unit (110). Blocks 110/130/140a to 140d respectively correspond to blocks 110/130/140 of FIG. 15.

A communication unit (110) may transmit and receive signals (e.g., data, control signals, etc.) to and from external devices, such as another vehicle, a base station (e.g., a base station, a road side unit (RSU), etc.), and a server. A control unit (120) may control components of a vehicle or an autonomous vehicle (100) to perform various operations. The control unit (120) may include an electronic control unit (ECU). A driving unit (140a) may cause the vehicle or the autonomous vehicle (100) to travel on the ground. The driving unit (140a) may include an engine, a motor, a power train, wheels, brakes, a steering apparatus, and the like. A power supply unit (140b) may supply power to the vehicle or the autonomous vehicle (100), and may include a wired/wireless charging circuit, a battery, and the like. A sensor unit (140c) may obtain vehicle state information, surrounding environment information, user information, and the like. The sensor unit (140c) may include an inertial measurement unit (IMU) sensor, a collision sensor, a wheel sensor, a speed sensor, an inclination sensor, a weight detection sensor, a heading sensor, a position module, a vehicle forward/reverse sensor, a battery sensor, a fuel sensor, a tire sensor, a steering sensor, a temperature sensor, a humidity sensor, an ultrasonic sensor, an illuminance sensor, a pedal position sensor, and the like. An autonomous driving unit (140d) may implement a technology for maintaining a lane during driving, a technology for automatically controlling a speed such as adaptive cruise control, a technology for automatically driving along a predetermined route, a technology for automatically setting a route and driving when a destination is set, and the like.

As an example, a communication unit (110) may receive map data, traffic information data, and the like from an external server. An autonomous driving unit (140d) may generate an autonomous driving route and a driving plan based on the obtained data. A control unit (120) may control a driving unit (140a) such that a vehicle or an autonomous vehicle (100) moves along the autonomous driving route according to the driving plan (e.g., speed/direction adjustment). During autonomous driving, the communication unit (110) may obtain updated traffic information data from the external server periodically or aperiodically, and may obtain surrounding traffic information data from surrounding vehicles. In addition, during autonomous driving, a sensor unit (140c) may obtain vehicle state information and surrounding environment information. The autonomous driving unit (140d) may update the autonomous driving route and the driving plan based on newly obtained data/information. The communication unit (110) may deliver, to the external server, information related to a vehicle location, an autonomous driving route, a driving plan, and the like. Based on information collected from vehicles or autonomous vehicles, the external server may predict traffic information data in advance by using AI technology or the like, and may provide the predicted traffic information data to the vehicles or the autonomous vehicles.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
obtaining information for a plurality of resources; and
performing a plurality of communication operations based on the plurality of resources,
wherein redundancy versions related to a plurality of transmissions related to the plurality of communication operations are the same.

2. The method of claim 1, wherein the plurality of communication operations include transmission repetition operations for the same data.

3. The method of claim 2, further comprising:
receiving, from a base station, information related to whether the transmission repetition operations are performed, through base station-to-device control information or radio resource control signaling,
wherein the plurality of communication operations are performed based on the information related to whether the transmission repetition operations are performed.

4. The method of claim 1, wherein a number of the plurality of resources and a number of the plurality of communication operations are the same.

5. The method of claim 1, further comprising:
receiving, from a base station, information related to a number of the plurality of communication operations, through base station-to-device control information or radio resource control signaling,
wherein the plurality of communication operations are performed as many times as the number of the plurality of communication operations.

6. The method of claim 5, further comprising:
transmitting, to the base station, information related to a preferred repetition number,
wherein the information related to the number of the plurality of communication operations is determined based on the information related to the preferred repetition number.

7. The method of claim 1, wherein the plurality of communication operations are reception operations related to base station-to-device communication.

8. The method of claim 7, wherein a base station related to the base station-to-device communication is included in a non-terrestrial network.

9. The method of claim 7, further comprising:
transmitting, to a base station related to the base station-to-device communication, information related to whether transmission repetition is required,
wherein the reception operations related to the base station-to-device communication are performed based on the information related to whether the transmission repetition is required.

10. The method of claim 1, wherein the plurality of communication operations are transmission operations related to device-to-base station communication.

11. The method of claim 1, wherein the plurality of communication operations are transmission operations or reception operations related to inter-device communication.

12. The method of claim 1, wherein the plurality of communication operations are operations related to a random access procedure.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
obtain information for a plurality of resources; and
perform a plurality of communication operations based on the plurality of resources,
wherein redundancy versions related to a plurality of transmissions related to the plurality of communication operations are the same.

15. A processing device adapted to control a first device, the processing device comprising:
at least one processor; and
at least one memory connected to the at least one processor and storing instructions,
wherein the instructions, based on being executed by the at least one processor, cause the first device to:
obtain information for a plurality of resources; and
perform a plurality of communication operations based on the plurality of resources,
wherein redundancy versions related to a plurality of transmissions related to the plurality of communication operations are the same.

16. A non-transitory computer-readable storage medium storing instructions that, when executed, cause a first device to:
obtain information for a plurality of resources; and
perform a plurality of communication operations based on the plurality of resources,
wherein redundancy versions related to a plurality of transmissions related to the plurality of communication operations are the same.

17. A method comprising:
transmitting, to a first device, information for a plurality of resources; and
performing a plurality of base station-to-device transmission operations based on the plurality of resources,
wherein redundance versions related to the plurality of base station-to-device transmission operations are the same.

18. The method of claim 17, wherein the plurality of base station-to-device transmission operations are repeated transmissions of the same base station-to-device physical shared channel transmission.

19. A second device comprising:
at least one transceiver;
at least one processor; and
at least one memory connected to the at least one processor and storing instructions,
wherein the instructions, based on being executed by the at least one processor, cause the second device to:
transmit, to a first device, information for a plurality of resources; and
perform a plurality of base station-to-device transmission operations based on the plurality of resources,
wherein redundance versions related to the plurality of base station-to-device transmission operations are the same.

20. The second device of claim 19, wherein the plurality of base station-to-device transmission operations are repeated transmissions of the same base station-to-device physical shared channel transmission.
